# FASCICULE DE BREVET EUROPEEN

(11) **EP 0 407 294 B1**
(45) Date de publication et mention de la délivrance du brevet: **12.05.1993**
(21) Numéro de dépôt: 90401922.1
(22) Date de dépôt: 03.07.1990
(51) Int. Cl.: C08F 263/00, C08F 18/24, G02C 7/04, B29D 11/00

(54) **Procédé et dispositif pour l'obtention d'un polymère à gradient d'indice**
Verfahren und Vorrichtung zur Herstellung eines Brechungsindexgradienten-Polymers
Process and device for obtaining a gradient index-polymer

(30) Priorité: 07.07.1989 FR 8909193
(43) Date de publication de la demande: 09.01.1991
(73) Titulaire: ESSILOR INTERNATIONAL Compagnie Générale d'Optique, F-94028 Créteil Cédex (FR)
(72) Inventeur: Yean, Leanirith, F-91160 Longjumeau (FR); Wajs, Georges, F-94200 Ivry (FR); Martin, Gérard, F-92160 Antony (FR); Guerrero, Patrick, F-77170 Lorrez Le Bocage (FR)
(74) Mandataire: CABINET BONNET-THIRION

(56) Documents cités:
- WPIL, FILE SUPPLIER, AN=85-260552, Derwent Publications Ltd, Londres, GB
- WPIL, FILE SUPPLIER, AN=85-246444, Derwent Publications Ltd, Londres, GB
- CHEMICAL ABSTRACTS, vol. 101, 1984, page 43, résumé no. 231646k, Columbus, Ohio, US; & JP-A-59 126 413 (ASAHI GLASS CO.) 21-07-1984

## Description

La présente invention concerne d'une manière générale l'obtention d'un élément en matière synthétique de qualité optique présentant en son sein un gradient d'indice, l'indice de réfraction y variant de manière continue suivant au moins une direction.

Elle vise plus particulièrement, mais non nécessairement exclusivement, le cas où un tel élément en matière synthétique est susceptible d'être mis en oeuvre pour la réalisation d'une lentille ophtalmique.

Ainsi qu'on le sait, la variation de l'indice de réfraction au sein d'une lentille ophtalmique permet, par exemple, à correction égale, d'en réduire, si désiré, l'épaisseur maximale, et donc le poids, au bénéfice du confort de l'usager.

Ainsi qu'on le sait, également, seules les techniques faisant intervenir une polymérisation permettent, à ce jour, d'obtenir un gradient d'indice sur une distance suffisante pour satisfaire aux nécessités de l'optique ophtalmique.

Mais, à ce jour, ces techniques ne permettent pas une maîtrise suffisante du gradient d'indice.

Elles ne permettent pas, en particulier, l'obtention d'un profil de gradient d'indice déterminé, variable à volonté tout en étant reproductible de manière fiable.

Dans la demande de brevet japonais No 60-200.383, par exemple, il est mis en oeuvre, comme matière de base, un mélange de deux monomères, choisis de masses moléculaires suffisamment différentes et conduisant à des homopolymères d'indices de réfraction différents, et, par centrifugation, on assure une certaine distribution massique radiale de ces monomères, qu'on fige ensuite par polymérisation.

Outre qu'un tel procédé est de mise en oeuvre relativement malaisée, il ne permet pas l'obtention, avec toute la précision nécessaire, d'un profil de gradient d'indice déterminé, il ne peut conduire qu'à un gradient d'indice se développant suivant une direction radiale par rapport à l'axe de l'élément en matière synthétique obtenu, et, en pratique, il ne convient au mieux qu'à la réalisation d'éléments en matière synthétique de relativement petites dimensions.

Dans la demande de brevet japonais No 60-162.610, il est proposé de mettre également en oeuvre, comme matière de départ, un mélange d'au moins deux monomères susceptibles de conduire à des homopolymères d'indices de réfraction différents, et, ceux-ci étant choisis de manière à présenter des vitesses de réactivité différentes, de soumettre ce mélange à un champ gravitationnel susceptible d'en modifier la répartition au fur et à mesure de la polymérisation.

Mais ce procédé est lui aussi difficile à maîtriser de manière précise.

Dans la demande de brevet japonais No 60-175.009, enfin, il est proposé de procéder par diffusion.

De manière plus précise, il est proposé, dans cette demande de brevet japonais No 60-175.009, de faire diffuser au sein d'une matière de base, qui, formée d'au moins un monomère partiellement polymérisé susceptible de conduire à un homopolymère d'indice de réfraction N1, se présente à l'état de gel, une matière d'addition, qui est elle-même formée d'au moins un monomère susceptible de conduire à un homopolymère d'indice de réfraction N2 différent de N1, et de parachever ensuite la matière de base ainsi traitée.

Mais, en pratique, avec un tel procédé, il apparaît difficile, sinon impossible, d'intervenir sur les paramètres, notamment la température et l'état du gel, susceptibles d'influencer la polymérisation, et donc d'imposer au profil de diffusion les variations nécessaires pour l'obtention du profil recherché pour l'indice de réfraction de l'élément en matière synthétique finalement obtenu.

La présente invention a d'une manière générale pour objet une disposition permettant au contraire, avec un procédé faisant intervenir la diffusion, l'obtention, de manière précise, fiable et reproductible, d'un profil donné pour le gradient d'indice.

De manière plus précise, elle a tout d'abord pour objet un procédé du genre suivant lequel, pour l'obtention d'un polymère à gradient d'indice, on fait diffuser au sein d'une matière de base qui, formée d'au moins un monomère partiellement polymérisé et susceptible de conduire à un homopolymère d'indice de réfraction N1, se présente à l'état de gel, une matière d'addition, qui est elle-même formée d'au moins un monomère susceptible de conduire à un homopolymère d'indice de réfraction N2 différent de N1, et on parachève ensuite la polymérisation de la matière de base ainsi traitée, ce procédé étant d'une manière générale caractérisé en ce que on choisit pour matière d'addition un mélange d'au moins deux monomères et en ce que on fait varier dans le temps la composition de ce mélange ; elle a encore pour objet un dispositif propre à la mise en oeuvre d'un tel procédé.

Ainsi, suivant l'invention, la maîtrise du profil de gradient d'indice recherché est obtenue en contrôlant de manière appropriée la composition de la matière d'addition instillée par diffusion dans la matière de base à traiter, et la polymérisation ultérieure de celle-ci permet d'y figer à l'état de polymère la configuration résultant de cette diffusion.

Il suffit, en pratique, pour que le profil du gradient d'indice final obtenu soit celui recherché, de disposer de courbes de modélisation qui, établies à partir des équations de diffusion correspondant aux monomères constitutifs de la matière d'addition diffusante, donnent par exemple, l'évolution à respecter pour la concentration de l'un et/ou de l'autre de ces monomères en fonction du temps.

Les caractéristiques et avantages de l'invention ressortiront d'ailleurs de la description qui va suivre, à titre d'exemple, en référence aux dessins schématiques annexés sur lesquels :
la figure 1 est un bloc diagramme d'un dispositif propre à la mise en oeuvre de l'invention ;
la figure 2 est un diagramme illustrant, suivant un exemple de mise en oeuvre de l'invention, l'évolution dans le temps de la concentration à respecter, par exemple, pour l'un des monomères constitutifs de la matière d'addition diffusante mise en oeuvre suivant l'invention ;
la figure 3 est un diagramme illustrant l'évolution correspondante dans le temps de l'indice de réfraction de cette matière d'addition diffusante ;
la figure 4 est un diagramme illustrant le profil du gradient d'indice obtenu au sein du polymère final après diffusion de la matière d'addition et polymérisation ultérieure de l'ensemble ;
les figures 5, 6, d'une part, et 7, 8, d'autre part, sont des diagrammes qui, analogues à ceux des figures 3, 4, se rapportent à d'autres exemples de mise en oeuvre de l'invention ;
la figure 9 reprend, pour partie, celle de la figure 1, pour une variante de mise en oeuvre de l'invention.

Globalement, il s'agit de faire diffuser, de manière contrôlée, au sein d'une matière de base 10, qui, formée d'au moins un monomère partiellement polymérisé et susceptible de conduire à un homopolymère d'indice de réfraction N1, se présente à l'état de gel, une matière d'addition 11, qui est elle-même formée d'au moins un monomère susceptible de conduire à un homopolymère d'indice de réfraction N2 différent de N1, et de parachever ensuite la polymérisation de la matière de base 10 ainsi traitée.

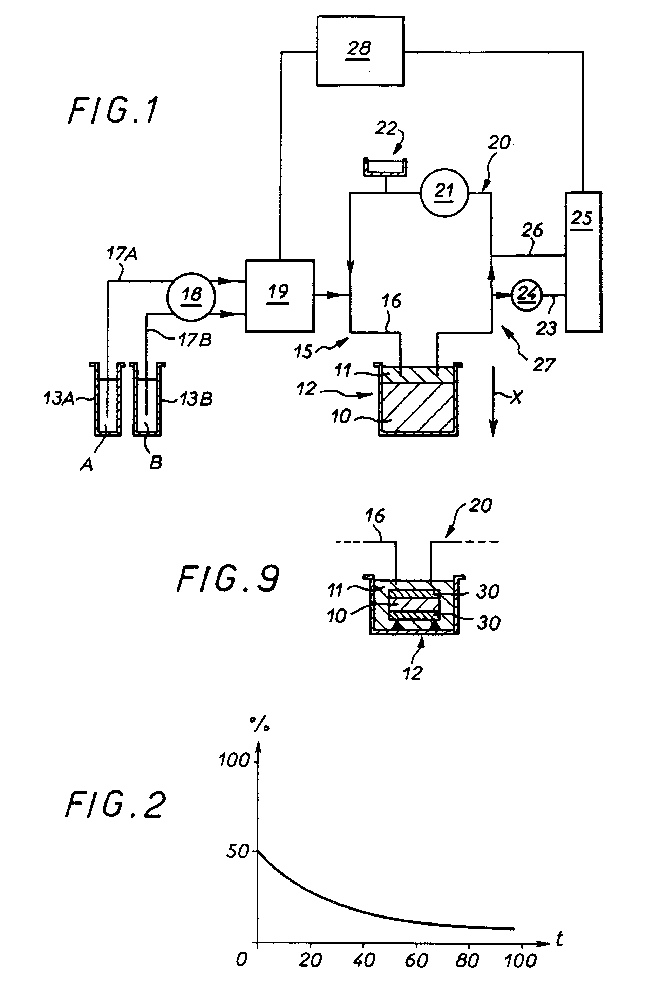

Dans la forme de mise en oeuvre illustrée par la figure 1, la matière de base 10 est disposée dans un récipient 12, susceptible, par exemple, de former pour elle un moule, et la matière d'addition 11 est déversée sur cette matière de base 10.

Comme indiqué, cette matière de base 10 se présente à l'état de gel.

Ainsi qu'on le sait, un gel, pour un polymère, est obtenu en limitant à un certain degré d'avancement sa polymérisation, et il est constitué de deux phases, à savoir une phase liquide, formée d'une solution de chaînes non réticulées dans une solution du ou des monomères initiaux, et une phase solide, formée de chaînes réticulées, polymères ou oligomères, du ou de ces monomères initiaux.

Ainsi qu'on le sait, également, lorsque, comme indiqué, une matière d'addition diffusante 11 est mise en contact d'un tel gel, trois types de phénomènes se superposent dans celui-ci.

Il y a tout d'abord une diffusion de cette matière d'addition diffusante 11 dans ce gel.

Il y a en outre, conjointement, une contre diffusion, vers l'extérieur, c'est-à-dire vers la matière d'addition diffusante 11, des chaînes non réticulées et du ou des monomères initiaux que contient le gel.

Il y a, enfin, une interaction éventuelle de la matière d'addition diffusante 11 avec les agrégats de chaînes réticulées.

En pratique, la composition locale, instantanée, du gel constituant la matière de base 10, et donc le profil, à l'instant correspondant, de son gradient d'indice est fonction :
- de la composition de la matière d'addition diffusante 11 mise en oeuvre,
- du degré d'avancement de la polymérisation,
- du coefficient de diffusion de chacun des constituants de la matière d'addition diffusante 11, ce coefficient variant notamment en fonction de la nature chimique de ces constituants, de leur concentration, et de la température,
- des paramètres d'interaction thermodynamiques entre la matière d'addition diffusante 11 et la matière de base 10, eux-mêmes fonction des paramètres précédents.

Suivant l'invention, on choisit pour matière d'addition diffusante 11 un mélange d'au moins deux monomères A, B, et on fait varier dans le temps la composition de ce mélange.

En pratique, on fait varier cette composition suivant une loi déterminée choisie pour conduire au profil de gradient d'indice recherché pour l'élément en matière synthétique finalement obtenu.

Par exemple, et tel que représenté, les deux monomères A, B constituant la matière d'addition diffusante 11 sont, initialement, disposés, chacun individuellement, dans des récipients 13A, 13B distincts, et, au récipient 12 contenant la matière de base 10 à traiter, est associé un moyen d'injection 15 propre à permettre d'y introduire de manière contrôlée l'un et/ou l'autre de ces deux monomères A, B.

Dans la forme de réalisation représentée, ce moyen d'injection 15 comporte, outre une tubulure 16 qui plonge dans le récipient 12, deux tubulures 17A, 17B, qui, plongeant chacune respectivement dans les récipients 13A, 13B, desservent, en parallèle, par l'intermédiaire d'une pompe 18, une électrovanne 19 desservant elle-même la tubulure 16.

Pour assurer l'homogénéité de la matière d'addition diffusante 11, il est prévu, en prise sur elle, une boucle de circulation 20, qui est activée par une pompe 21, avec, piqué en dérivation, un récipient 22 de maintien en pression de l'ensemble, et à laquelle appartient, dans la forme de réalisation représentée, la tubulure 16.

Suivant l'invention, on contrôle la composition de la matière d'addition diffusante 11 en en mesurant l'indice de réfraction.

Dans la forme de réalisation représentée, une tubulure 23, piquée sur la boucle de circulation 20, et équipée d'une pompe 24, dérive, à cet effet, vers un réfractomètre 25, les quantités de matière d'addition diffusante 11 nécessaires aux mesures à effectuer, avec retour de celles-ci par une tubulure 26.

Ainsi, dans cette forme de réalisation, la boucle de circulation 20 constitue par elle-même des moyens de prélèvement 27 qui, associés au récipient 12, sont propres à en soustraire une partie de la matière d'addition diffusante 11 pour soumission de celle-ci au réfractomètre 25.

Enfin, il est prévu, dans cette forme de réalisation, pour asservissement de l'électrovanne 19 au réfractomètre 25, un programmateur 28 pilotant conjointement cette électrovanne 19 et ce réfractomètre 25.

De préférence, la matière de base 10 est formée d'un seul monomère.

Il s'agit par exemple d'allylcarbonate de diéthylène glycol, ou CAD, dont l'homopolymère a un indice de réfraction égal à 1,5 et dont la polymérisation partielle initiale peut par exemple être effectuée par voie radicalaire, à l'aide d'un initiateur tel qu'un péroxycarbonate de diisopropyle, ou PIP, ou qu'un tertiobutyl péroxy-2-éthylhexanoate, ou TPE.

De préférence, également, on choisit pour matière d'addition diffusante 11 un mélange formé de la matière de base 10, c'est-à-dire, en l'espèce, du monomère unique constituant celle-ci, et d'au moins un monomère distinct.

Autrement dit, l'un des monomères A, B constituant la matière d'addition diffusante 11, et par exemple le monomère A, est identique à celui, en l'espèce du CAD, constituant la matière de base 10.

De préférence, l'autre monomère B est choisi, d'une part, pour conduire à un homopolymère d'indice de réfraction plus faible que celui de l'homopolymère correspondant au CAD, et, d'autre part, pour avoir une réactivité suffisante vis-à-vis de ce dernier.

Il s'agit par exemple de l'allylcarbonate de trifluoro 2,2,2 éthane, ou CAF.

Un tel monomère peut être synthétisé par réaction entre du trifluoro 2,2,2 éthanol et du chloroformiate d'allyle, dans l'éther étylique, en présence d'une solution aqueuse de soude.

L'indice de réfraction de l'homopolymère correspondant au CAF est égal à 1,415.

On donnera maintenant ci-après plusieurs exemples de mise en oeuvre de l'invention.

### EXEMPLE 1

La polymérisation partielle initiale du CAD constituant la matière de base 10 assurée par voie radicalaire, en présence de 3 %, en masse, de PIP, est effectuée pendant 1h30 à 48°C.

Elle conduit à un gel formé par environ 15 % d'oligomère et 75 % de monomère initial.

Tel que représenté sur la figure 1, la matière d'addition diffusante 11 est introduite au-dessus de ce gel.

Elle est constituée par un mélange à 50/50, en volume, de CAD et de CAF.

Pour cette introduction, la pompe 18 et l'électrovanne 19 interviennent conjointement tour à tour sur le récipient 13A et sur le récipient 13B.

La pompe 21 assure l'homogénéisation de l'ensemble.

La diffusion intervient axialement, du niveau supérieur de la matière de base 10 vers le fond du récipient 12, tel que schématisé par la direction X sur la figure 1.

Elle est poursuivie pendant 96h, à 20°C.

Suivant l'invention, il est procédé à une modification de la composition de la matière d'addition diffusante 11 au cours de cette diffusion.

En pratique, il est procédé à une injection progressive de CAD dans cette matière d'addition diffusante 11, par l'intermédiaire de la pompe 18 et de l'électrovanne 19.

Il en résulte un abaissement progressif au sein de celle-ci de la concentration en CAF.

Le diagramme de la figure 2 donne à titre d'exemple, en %, l'évolution de cette concentration en CAF en fonction du temps t, en heures.

Pour l'obtention d'un profil de gradient d'indice donné pour l'élément en matière synthétique final obtenu, il suffit que soit respectée une évolution donnée dans le temps de cette concentration en CAF.

Or, de cette concentration en CAF dépend l'indice de réfraction instantané de la matière d'addition diffusante 11.

A temps régulier, il est donc procédé, par le réfractomètre 25, à des mesures d'indice de réfraction sur cette matière d'addition diffusante 11.

Il suffit, dès lors, de piloter en conséquence l'électrovanne 19.

C'est, en pratique, le programmateur 28 qui, à partir de courbes de modélisation préalablement établies, assure l'asservissement correspondant.

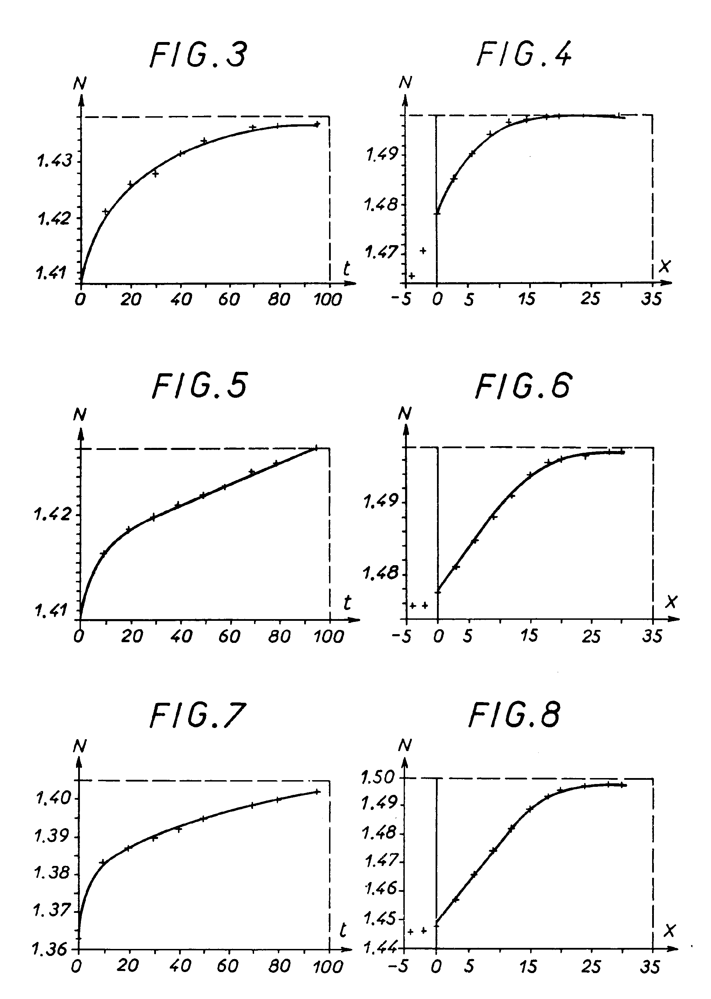

Le diagramme de la figure 3 donne l'évolution, de l'indice de réfraction N de la matière d'addition diffusante 11, et, donc, de sa composition, en fonction du temps t exprimé en heures.

Au terme de la diffusion, à l'issue de laquelle la matière d'addition diffusante 11 est par exemple totalement absorbée par la matière de base 10, la polymérisation de cette dernière est parachevée, in situ, selon un cycle approprié.

Il en résulte l'obtention, sous forme d'un palet, d'un élément en matière synthétique de qualité optique présentant, axialement, c'est-à-dire parallèlement à la direction X, un gradient d'indice déterminé.

Le diagramme de la figure 4 donne le profil de ce gradient d'indice au sein de ce palet, pour une variation d'indice de la matière d'addition diffusante 11 correspondant à la figure 3.

### EXEMPLE 2

La polymérisation partielle initiale du CAD constituant la matière de base 10 est assurée en présence de 4 % de TPE, à 70°C pendant 2h30.

Pour le reste, les modalités de mise en oeuvre sont du type de celles décrites précédemment.

Les figures 5, 6 donnent les diagrammes correspondants.

### EXEMPLE 3

Le CAD constituant la matière de base 10 est amorcé comme dans l'exemple 2.

Mais la matière d'addition diffusante 11 est initialement formée en totalité de CAF.

Les figures 7, 8 donnent les diagrammes correspondants.

Dans ce qui précède, la diffusion intervient axialement.

Mais, avantageusement, elle peut tout aussi bien intervenir radialement, de la périphérie de la matière de base 10 traitée vers le centre de celle-ci.

La figure 9 illustre, à titre d'exemple, une mise en oeuvre propre à une telle intervention radiale de la diffusion.

En bref, le gel constituant la matière de base 10 est disposé entre deux moules 30, constitués par exemple chacun d'une plaquette de verre, et, dans le récipient 12, l'ensemble est immergé dans la matière d'addition diffusante 11.

Bien entendu, la présente invention ne se limite pas aux formes de mise en oeuvre décrites et représentées, mais englobe toute variante d'exécution.

Il doit en outre être souligné que le dispositif décrit ne constitue en fait qu'un dispositif expérimental, et qu'il est donc susceptible de nombreuses modifications.

## Revendications

1. Procédé pour l'obtention d'un polymère a gradient d'indice, du genre suivant lequel on fait diffuser au sein d'une matière de base qui, formée d'au moins un monomère partiellement polymérisé et susceptible de conduire à un homopolymère d'indice de réfraction N1, se présente à l'état de gel, une matière d'addition, qui est elle-même formée d'au moins un monomère susceptible de conduire à un homopolymère d'indice de réfraction N2 différent de N1, et on parachève ensuite la polymérisation de la matière de base ainsi traitée, caractérisé en ce que on choisit pour matière d'addition un mélange d'au moins deux monomères (A, B), et en ce que on fait varier dans le temps la composition de ce mélange.

2. Procédé suivant la revendication 1, caractérisé en ce que on fait varier la composition de la matière d'addition suivant une loi déterminée choisie pour conduire au profil de gradient d'indice recherché.

3. Procédé suivant l'une quelconque des revendications 1, 2, caractérisé en ce que on contrôle la composition de la matière d'addition en mesurant l'indice de réfraction.

4. Procédé suivant l'une quelconque des revendications 1 à 3, caractérisé en ce que on choisit pour matière d'addition un mélange formé de la matière de base et d'au moins un monomère distinct.

5. Procédé suivant la revendication 4, caractérisé en ce que la matière de base est formée d'un seul monomère et l'un des monomères (A, B) constituant la matière d'addition est identique à celui-ci.

6. Procédé suivant la revendication 5, caractérisé en ce que la matière de base est formée d'allylcarbonate de diéthylène glycol et la matière d'addition d'un mélange de ce monomère et d'allylcarbonate de trifluoro 2,2,2 éthane.

7. Procédé suivant l'une quelconque des revendications 1 à 6, caractérisé en ce que la polymérisation partielle initiale de la matière de base est effectuée par voie radicalaire, à l'aide d'un initiateur tel qu'un péroxycarbonate de diisopropyle ou qu'un tertiobutyle péroxy-2-éthylhexanoate.

8. Dispositif pour la mise en oeuvre du procédé suivant l'une quelconque des revendications 1 à 7, du genre mettant en oeuvre un récipient propre à recevoir les matières à traiter, caractérisé en ce que, audit récipient, est associé un moyen d'injection propre à permettre d'y introduire de manière contrôlée l'un et/ou l'autre des deux monomères (A, B) composant la matière d'addition.

9. Dispositif suivant la revendication 8, caractérisé en ce que, audit récipient, sont associés des moyens de prélèvement propres à en soustraire une partie de la matière d'addition pour soumission de celle-ci à un réfractomètre.

## Patentansprüche

1. Verfahren zur Gewinnung eines Polymers mit Indexgradient, derart, daß man innerhalb eines Basismaterials, das, aus wenigstens einem teilweise polymerisierten und zur Herbeiführung eines Homopolymers mit Brechungsindex N1 geeigneten Monomer gebildet, in gelförmigem Zustand vorliegt, einen Zusatz diffundieren läßt, der selbst aus wenigstens einem zur Herbeiführung eines Homopolymers mit Brechungsindex N2 ≠ N1 geeigneten Monomer gebildet ist, und man sodann die Polymerisierung des so behandelten Basismaterials vollendet, dadurch gekennzeichnet, daß man als Zusatz ein Gemisch aus wenigstens zwei Monomeren (A, B) auswählt, und daß man die Zusammensetzung des Gemisches in der Zeit variieren läßt.

2. Verfahren nach Anspruch 1, dadurch gekennzeichnet, daß man die Zusammensetzung des Zusatzes gemäß einem bestimmten Gesetz variieren läßt, das so ausgewählt ist, daß es zur Herbeiführung des Profils des gesuchten Indexgradienten geeignet ist.

3. Verfahren nach einem der Ansprüche 1, 2, dadurch gekennzeichnet, daß man die Zusammensetzung des Zusatzes durch Messung des Brechungsindexes steuert.

4. Verfahren nach einem der Ansprüche 1 bis 3, dadurch gekennzeichnet, daß man als Zusatz ein Gemisch auswählt, das aus dem Basismaterial und wenigstens einem unterschiedenen Monomer gebildet ist.

5. Verfahren nach Anspruch 4, dadurch gekennzeichnet, daß das Basismaterial aus einem einzigen Monomer gebildet ist, und eines der Monomere (A, B), das den Zusatz bildet, mit jenem identisch ist.

6. Verfahren nach Anspruch 5, dadurch gekennzeichnet, daß das Basismaterial aus Diethylenglykolallylcarbonat und der Zusatz aus einem Gemisch dieses Monomers mit 2,2,2-Trifluorethan-Allylcarbonat gebildet ist.

7. Verfahren nach einem der Ansprüche 1 bis 6, dadurch gekennzeichnet, daß die ursprüngliche partielle Polymerisierung des Basismaterials auf radikalische Weise bewirkt wird, und zwar mit Hilfe eines Katalysators, beispielsweise Diisopropylperoxycarbonat oder Tertiärbutyl-Peroxy-2-Ethylcaprinat.

8. Vorrichtung zur Anwendung des Verfahrens gemäß einem der Ansprüche 1 bis 7, derart, daß ein zur Aufnahme der zu behandelnden Materialien geeigneter Behälter eingesetzt wird, dadurch gekennzeichnet, daß mit dem Behälter eine Einspritzeinrichtung verbunden ist, die geeignet ist, in gesteuerter Weise eine Einführung des einen und/oder des anderen der beiden Monomere (A, B), die den Zusatz bilden, in ihn zu ermöglichen.

9. Vorrichtung nach Anspruch 8, dadurch gekennzeichnet, daß mit dem Behälter Entnahmeeinrichtungen verbunden sind, die geeignet sind, von diesem einen Teil des Zusatzes zu entnehmen, um ihn einem Refraktometer zu unterwerfen.

## Claims

1. A process for producing a polymer with an index gradient, of the kind wherein there is diffused into a base material which, formed by at least one partially polymerised monomer capable of yielding a homopolymer with a refractive index N1, is in the gel state, an additive material which is itself formed by at least one monomer capable of yielding a homopolymer with a refractive index N2 which is different from N1, and polymerisation of the base material treated in that way is then completed, characterised in that the additive material chosen is a mixture of at least two monomers (A, B) and that the composition of said mixture is varied with time.

2. A process according to claim 1 characterised in that the composition of the additive material is varied according to a given law which is chosen to give the required index gradient profile.

3. A process according to either one of claims 1 and 2 characterised in that the composition of the additive material is monitored by measuring the refractive index.

4. A process according to any one of claims 1 to 3 characterised in that the additive material chosen is a mixture formed by the base material and at least one different monomer.

5. A process according to claim 4 characterised in that the base material is formed by a single monomer and one of the monomers (A, B) constituting the additive material is identical to said monomer.

6. A process according to claim 5 characterised in that the base material is formed by diethylene glycol allylcarbonate and the additive material is a mixture of said monomer and 2,2,2-trifluoroethane allylcarbonate.

7. A process according to any one of claims 1 to 6 characterised in that initial partial polymerisation of the base material is effected by a free radical-producing procedure by means of an initiator such as a diisopropyl peroxycarbonate or a tert-butyl 2-peroxyethylhexanoate.

8. A device for carrying out the process according to any one of claims 1 to 7 of the kind comprising a container for receiving the materials to be treated, characterised in that associated with said container is an injection means for permitting one and/or the other of the two monomers (A, B) making up the additive material to be introduced into the container in a controlled fashion.

9. A device according to claim 8 characterised in that associated with said container are sampling means for removing therefrom a part of the additive material for submission thereof to a refractometer.
